# FASCICULE DE BREVET EUROPEEN

(11) **EP 1 031 011 B1**
(45) Date de publication et mention de la délivrance du brevet: **27.03.2002**
(21) Numéro de dépôt: 98952488.9
(22) Date de dépôt: 13.11.1998
(51) Int. Cl.: G01D 9/00

(54) **DISPOSITIF DE SURVEILLANCE DE L'EVOLUTION DANS LE TEMPS D'AU MOINS UN PARAMETRE PHYSIQUE D'UN PRODUIT PERISSABLE**
VORRICHTUNG ZUR ÜBERWACHUNG DER ZEITLICHEN VERÄNDERUNG MINDESTENS EINES PHYSIKALISCHEN PARAMETERS EINES LEICHTVERDERBLICHEN PRODUKTES
DEVICE FOR MONITORING THE EVOLUTION IN TIME OF AT LEAST ONE PHYSICAL PARAMETER OF A PERISHABLE PRODUCT

(30) Priorité: 13.11.1997 FR 9714581
(43) Date de publication de la demande: 30.08.2000
(73) Titulaire: Salanon, Daniel René, 1170 Aubonne (CH)
(72) Inventeur: SALANON, Daniel, René, CH-1170 Aubonne (CH); CUGNI, Edouard, CH-1337 Vallorbe (CH); RAHALI, Fouad, CH-1028 Préverenges (CH)
(74) Mandataire: Nithardt, Roland
(86) Numéro de dépôt international: CH9800490
(87) Numéro de publication internationale: WO9926042

(56) Documents cités:
- EP-A- 0 511 807
- WO-A-89/03020
- US-A- 4 061 033
- US-A- 4 972 099

## Description

### Domaine Technique

La présente invention concerne un dispositif de surveillance de l'évolution dans le temps d'au moins un paramètre physique pour prévenir la contamination ou la dégradation d'un produit périssable, comportant des moyens pour mesurer à intervalles réguliers ledit paramètre physique et enregistrer les valeurs mesurées de ce paramètre en fonction du temps, des moyens pour comparer l'évolution des valeurs du paramètre dans le temps à un critère d'acceptation correspondant à des limites de valeurs du paramètre où le produit est en dessous d'un risque de contamination ou de dégradation, des moyens de transfert et de lecture des valeurs mesurées et des moyens pour générer un signal au cas où ce critère d'acceptation est dépassé, lesdits moyens pour générer un signal comportant un premier indicateur agencé pour signaler que ledit paramètre physique a évolué dans une zone qui est non critique pour le produit, un deuxième indicateur agencé pour signaler que ledit paramètre physique a évolué dans une zone dans laquelle le produit est considéré comme avarié, et au moins un troisième indicateur agencé pour signaler la variation du comportement du produit dans une zone intermédiaire qui est critique pour ce produit, lesdites zones étant définies par une combinaison de valeurs dudit paramètre physique et du temps passé par le produit périssable dans des conditions définies par ce paramètre.

La contamination ou la dégradation de certains produits périssables tels que des denrées alimentaires, des médicaments ou des substances vivantes comme par exemple le sang, peut se produire au cours d'une évolution dans le temps du conditionnement de ces produits. L'évolution de ce conditionnement est liée à l'évolution dans le temps d'un ou de plusieurs paramètres physiques, chimiques ou biologiques, tels que la température, l'humidité, les vibrations mécaniques, la concentration d'un acide ou la densité de germes.

### Technique antérieure

On connaît déjà des dispositifs de ce type, qui sont habituellement basés sur une surveillance d'un paramètre qui est la température du produit. Il en est ainsi du système thermochimique de la société 3M aux USA, qui comporte des bandelettes pourvues de pastilles qui changent de couleur Si la température du produit a dépassé d'une valeur déterminée la valeur seuil imposée pour la conservation de ce produit. Ces pastilles se désagrègent en fonction du temps, et indiquent approximativement la durée du dépassement. Ces bandelettes sont conçues pour être collées sur le produit à surveiller.

Ce système présente les inconvénients suivants :
- la mesure de la température est imprécise;
- la calibration de la température est impossible;
- l'usage des pastilles est unique;
- la représentation graphique du système est inexistante.

Un autre système connu sous le nom de système électromécanique, comporte un enregistreur qui relève et trace la courbe de l'évolution de la température d'un produit sur un papier qui se déroule mécaniquement au cours du temps.

Ce système présente les inconvénients suivants :
- sa taille est importante;
- sa consommation en énergie est élevée;
- il est sensible à l'humidité;
- sa calibration est délicate.

Un troisième système connu est celui de la société Elbro et Testo en Allemagne, qui est appelé système électronique et qui est destiné principalement à une utilisation en milieu industriel. L'appareil correspondant enregistre avec une grande précision des points de mesure de température ou d'humidité. Il permet de mesurer avec précision les valeurs des paramètres, mais non d'effectuer de la surveillance à faible coût.

Ce système présente les inconvénients suivants :
- la taille de l'équipement est importante, de sorte qu'il ne peut pas être fixé sur un produit de petites dimensions, par exemple une poche de sang;
- la lecture des données enregistrées nécessite un ordinateur ou un autre accessoire coûteux;
- la programmation de l'équipement ne peut être faite que par un ordinateur; le prix est élevé.

Par ailleurs, le brevet américain US 4 972 099 a pour objet une carte de détection comportant un capteur agencé pour détecter et enregistrer à des instants prédéterminés un phénomène physique extérieur tel que la température lors du transport de produits alimentaires surgelés, et pour convertir le phénomène enregistré en un signal électrique. Cette carte est en outre pourvue d'un circuit intégré permettant de traiter ce signal électrique et de mémoriser la valeur enregistrée, cette valeur pouvant ensuite être lue par un dispositif connu tel qu'un ordinateur portable. Lorsqu'un écart par rapport à une température prédéterminée est détecté, un signal sonore ou lumineux est émis par cette carte. La carte est alimentée par des piles incorporées.

Le brevet français FR 2 683 318 décrit un dispositif de mesure dans le temps de la température de produits surgelés, dans lequel le détecteur est un oscillateur à quartz dont la fréquence varie en fonction de la température. Ce dispositif de mesure est portable et peut être raccordé à un lecteur couplé à un micro-ordinateur pour lire les variations enregistrées par rapport à une plage de valeurs autorisées.

La demande internationale publiée sous le N° WO 89 03020 concerne une carte destinée à mesurer et à enregistrer la température ambiante ou le taux d'humidité dans un local de stockage ou durant le transport de produits alimentaires. Cette carte comporte un capteur et une carte mémoire RAM.

Les valeurs mesurées et enregistrées peuvent être lues par un lecteur externe.

La publication européenne EP O 511 807 a pour objet un dispositif de mesure du même type que celui objet du brevet américain précité, dans lequel l'alimentation électrique des éléments ne se fait pas par des batteries mais à l'aide de moyens de couplage inductif logés dans l'unité de détection. Cette conception permet d'obtenir un dispositif de plus petite taille que celle du système américain.

Tous ces dispositifs présentent un inconvénient majeur. En effet, ces dispositifs affichent la valeur du paramètre mesuré au moyen d'un dispositif particulier tel qu'un ordinateur ou un dispositif similaire dédié à cette application. Aucun d'entre-eux ne permet d'effectuer un contrôle ponctuel. En outre, ces dispositifs ne sont pas inviolables.

Le brevet américain US-A-4,061,033 décrit un dispositif d'intégration de la température d'un produit en fonction du temps. Ce dispositif ne permet pas de tracer l'historique de la température du produit, mais délivre une information concernant la durée de vie restante d'un produit.

### Exposé de l'invention

La présente invention se propose de pallier cet inconvénient ainsi que l'ensemble des inconvénients des systèmes de l'art antérieur en réalisant un dispositif de faibles dimensions, peu coûteux, comportant un équipement électronique qui permet de surveiller les paramètres à risques d'un produit, de déterminer la contamination éventuelle sans tests directs sur le produit à surveiller, d'assurer la représentation graphique, le diagnostic et la prévention. Ce dispositif permet également de faire savoir s'il a été désolidarisé, pendant un certain laps de temps, du produit sur lequel il est fixé. Il peut être considéré comme étant la "boîte noire" du produit.

Le dispositif selon l'invention tel que défini en préambule est caractérisé en ce qu'il comporte des moyens de contrôle ponctuel comportant un aimant coopérant avec au moins l'un desdits indicateurs.

Une contamination peut être jugée inacceptable Si le paramètre physique ne satisfait plus au critère d'acceptation prédéterminé. Ce critère d'acceptation définit des limites fixées par des normes ou des règlements, à l'intérieur desquels le ou les paramètres peuvent évoluer en fonction du temps, sans atteindre le seuil qui correspond au critère d'acceptation. Ce critère d'acceptation peut également être défini par un autre algorithme ou un ensemble de règles tel qu'un système expert ou une logique floue.

L'évolution du ou des paramètres physiques se fait lors d'un changement de conditionnement du produit périssable, par exemple lors d'un transport ou lors d'une modification volontaire ou involontaire des conditions dans lesquelles le produit est stocké. A titre d'exemple, Si le produit est conservé dans un appareil frigorifique, une panne de l'installation peut modifier le paramètre de façon involontaire.

La combinaison des valeurs mesurées du paramètre et du temps permet de définir des données qui, comparées au critère d'acceptation, permettent de surveiller le produit et de détecter un risque de contamination ou une dégradation d'une manière indirecte, sans procéder à une quelconque analyse physique du produit. En réalité, cette manière de procéder ne permet pas de détecter directement une contamination par une mesure appropriée, mais de révéler les conditions pouvant entraîner une cause de contamination. Cette cause est appelée phénomène catalyseur. Elle a l'avantage d'être beaucoup moins coûteuse que les tests opérés directement sur le produit périssable. En outre, cette analyse est non destructrice du produit.

De façon avantageuse, le dispositif comporte en outre des moyens pour définir une valeur limite dudit paramètre physique, ces moyens étant couplés audit deuxième indicateur et agencés pour enclencher cet indicateur lorsque le produit périssable se trouve dans des conditions situées hors de cette valeur limite.

Le dispositif peut également comporter des moyens pour définir deux valeurs limites délimitant une plage de valeurs acceptables dudit paramètre physique, ces moyens étant couplés auxdits premier, deuxième et troisième indicateurs et agencés pour enclencher le deuxième indicateur lorsque le produit périssable a séjourné dans des conditions situées hors desdites valeurs limites et pour enclencher ledit premier ou ledit troisième indicateur lorsque le produit a séjourné dans des conditions correspondant à la plage des valeurs acceptables dudit paramètre physique, l'enclenchement dudit premier ou dudit troisième indicateur dépendant de la combinaison de valeurs du paramètre physique et du temps.

Dans une première forme de réalisation du dispositif, les moyens pour mesurer le paramètre physique et enregistrer les valeurs mesurées en fonction du temps comportent un enregistreur en contact avec le produit à surveiller.

Dans une seconde forme de réalisation du dispositif, les moyens pour mesurer le paramètre physique et enregistrer les valeurs mesurées en fonction du temps comportent un enregistreur et ledit enregistreur est solidaire d'un support en contact avec le produit à surveiller.

Dans toutes les formes de réalisation, l'enregistreur comporte au moins une base de temps, une mémoire ROM pour stocker les données constantes, une mémoire RAM pour stocker les données variables, une unité de contrôle de l'enregistrement, un dispositif intermédiaire, un élément électromagnétique et au moins un premier capteur.

De façon avantageuse, l'élément électromagnétique est agencé pour coopérer avec un aimant extérieur au dispositif en vue d'enclencher les indicateurs du dispositif.

Dans toutes les variantes de réalisation, le dispositif comporte des moyens agencés pour détecter le retrait de l'enregistreur du produit qu'il doit surveiller ou de son support.

De préférence, l'enregistreur comprend un boîtier comportant un fond plat, et ledit fond est pourvu de moyens de fixation dudit enregistreur sur le produit. Ces moyens de fixation comportent avantageusement un revêtement autocollant dont le décollement est détectable lors d'un retrait dudit enregistreur.

Lorsque l'enregistreur est fixé sur un support, ledit support comporte des moyens de fixation sur le produit à surveiller et des moyens de positionnement agencés pour coopérer avec des moyens correspondants du boîtier de l'enregistreur.

Dans ce cas, les moyens pour détecter le retrait de l'enregistreur comportent un aimant logé dans ledit support, ledit aimant coopérant avec l'élément électromagnétique intégré dans ledit enregistreur.

Dans une variante de réalisation, ledit troisième indicateur de variation de comportement du produit est un indicateur lumineux dont l'intensité lumineuse varie en fonction de ladite variation de comportement.

Dans toutes les formes de réalisation, les moyens de transfert et de lecture des valeurs mesurées comportent une tête de lecture solidaire d'un lecteur.

La tête de lecture est agencée pour coopérer avec l'enregistreur et est pourvue d'éléments de contact métalliques agencés pour correspondre avec des éléments de contact métalliques de l'enregistreur en vue de la transmission des données mémorisées dans ledit enregistreur, et de moyens de positionnement sur cet enregistreur.

Pour permettre cette transmission, le boîtier de l'enregistreur comporte des moyens de positionnement de la tête de lecture sur ledit enregistreur.

Dans une variante de réalisation, l'enregistreur comporte un deuxième capteur similaire au premier capteur en vue de réaliser des tests automatiques.

Dans la forme de réalisation préférée, le lecteur comporte un clavier et un écran et des moyens de liaison avec l'enregistreur.

### Description sommaire des dessins

La présente invention sera mieux comprise en référence à la description d'une forme de réalisation préférée et aux dessins annexés donnés à titre non limitatif, dans lesquels :
la figure 1 représente une vue en perspective du dispositif selon l'invention,
la figure 2 représente une vue extérieure de l'enregistreur du dispositif selon l'invention,
la figure 3 représente une vue sous la forme d'un schéma-bloc d'une première forme de réalisation du circuit électronique de l'enregistreur, ce circuit étant réalisé avec des composants discrets,
la figure 4 représente une vue sous la forme d'un schéma-bloc d'une deuxième forme de réalisation du circuit électronique de l'enregistreur, ce circuit étant réalisé sous la forme intégrée,
la figure 5 représente une vue en perspective du lecteur du dispositif de la figure 1,
les figures 6A et 6B représentent une vue éclatée de la tête de lecture du dispositif de la figure 1, et
la figure 7 représente une vue en perspective du support de l'enregistreur de la figure 2.

### Manières de réaliser l'invention

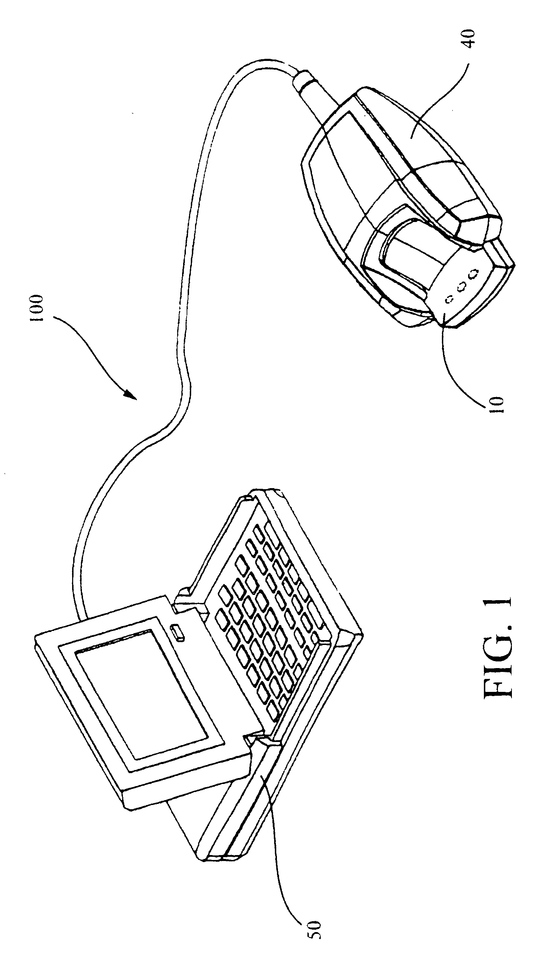

La figure 1 représente une vue d'ensemble du dispositif selon l'invention destiné à la surveillance de l'évolution dans le temps d'au moins un paramètre physique tel que la température pour prévenir la contamination ou la dégradation d'un produit périssable. Ce dispositif 100 comprend des moyens pour mesurer à intervalles réguliers ledit paramètre physique et enregistrer les valeurs mesurées de ce paramètre en fonction du temps, sous la forme d'un enregistreur 10 contenant des moyens pour comparer l'évolution des valeurs du paramètre dans le temps à un critère d'acceptation défini pour le produit, des moyens pour générer un signal au cas où ce critère d'acceptation est dépassé, et des moyens de transfert et de lecture des valeurs mesurées sous la forme d'une tête de lecture 40 associée à un lecteur 50.

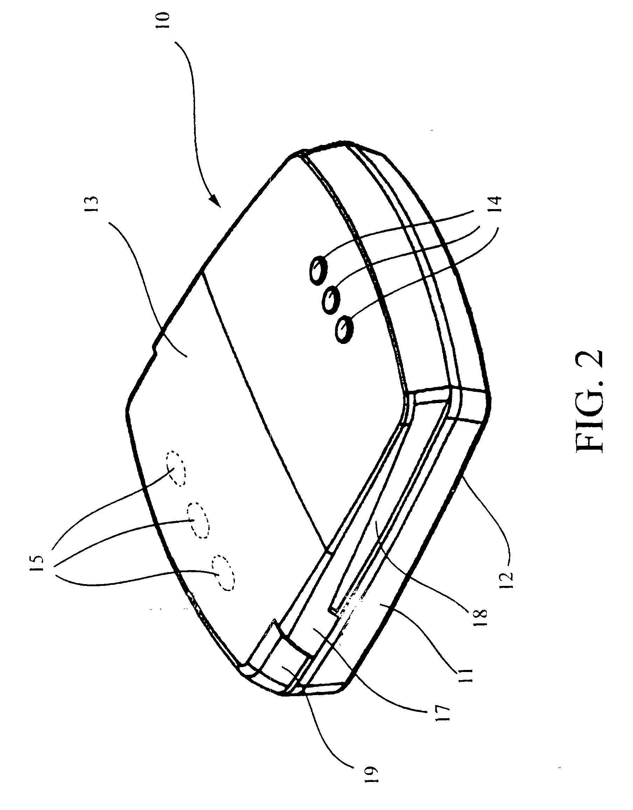

L'enregistreur 10 tel qu'illustré par la figure 2 se présente sous la forme d'une pièce ayant sensiblement la taille du boîtier d'une montre-bracelet et se compose d'un boîtier 11 comportant un fond 12 en forme de plaque plane et un couvercle 13 sensiblement plan. Ce couvercle 13 est pourvu de trois contacts métalliques 14. Ce couvercle réalisé en une matière plastique translucide permet de voir la lumière émise par trois diodes photoluminescentes 15 de couleurs différentes, par exemple verte, rouge et jaune, qui constituent des indicateurs pour signaler comment le paramètre physique évolue dans le temps. Le boîtier 11 est par ailleurs pourvu sur chacune de ses faces latérales 17 d'une rainure 18 et d'un décrochement 19 dont la fonction sera définie par la suite. Le fond 12 est pourvu sur sa face extérieure de moyens de fixation sur le produit à surveiller. Ces moyens de fixation peuvent se présenter sous la forme d'un revêtement autocollant permettant la fixation de l'enregistreur sur le produit par collage.

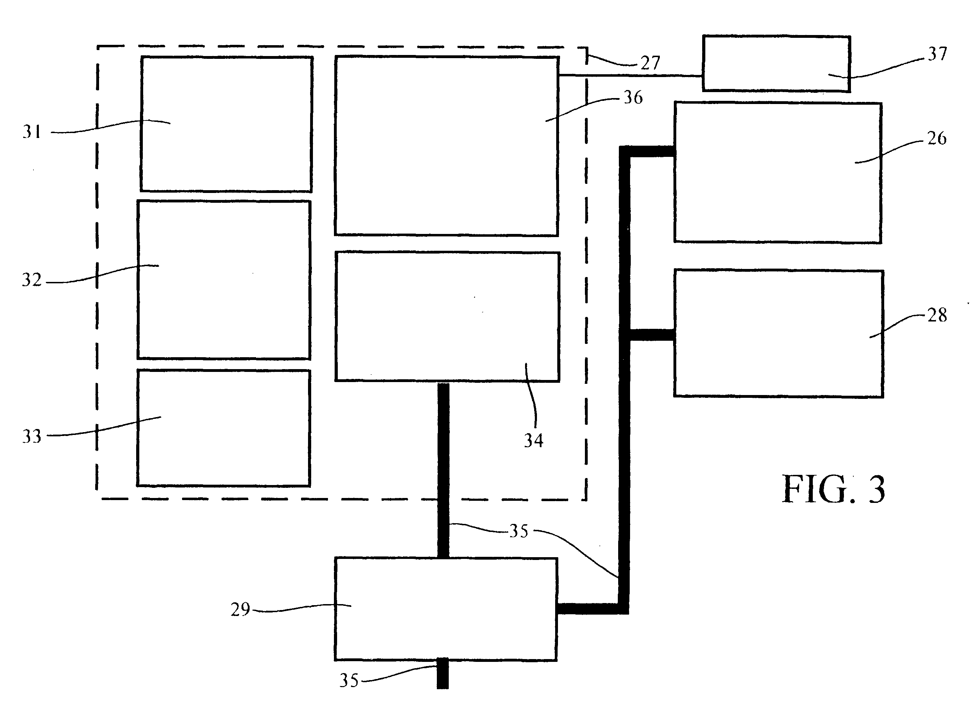

La figure 3 est un schéma-bloc illustrant de façon schématique les composants de l'enregistreur 10 dont la fonction consiste à mesurer le ou les paramètres physiques concernés et à enregistrer les valeurs variables de ce ou de ces paramètres en fonction du temps. Cet enregistreur comporte un capteur de température 26 numérique, un microcontrôleur 27, une mémoire 28 du type EEPROM, un dispositif sélecteur de ligne 29 et un élément électromagnétique 37 tel qu'un relais à lame. Tous ces composants et quelques composants classiques tels que résistances et condensateurs, ainsi qu'une batterie d'accumulateurs fournissant l'énergie requise au système, sont montés sur un circuit imprimé. La mémoire du type EEPROM est destinée à enregistrer les données du capteur de température et le temps. Le microcontrôleur 27 est agencé pour assurer le contrôle et le séquencement des enregistrements. Il comprend une base de temps 31 à 32 768 Hz, une mémoire ROM 32 ou mémoire morte pouvant stocker 2048 instructions et une mémoire RAM 33 appelée mémoire vive de 126 bytes. Il contient en outre une interface I²C maître 34 qui est connectée au sélecteur de ligne 29 par un bus I²C 35. Il contient enfin un bloc 36 dit de contrôle et de séquencement de l'enregistreur.

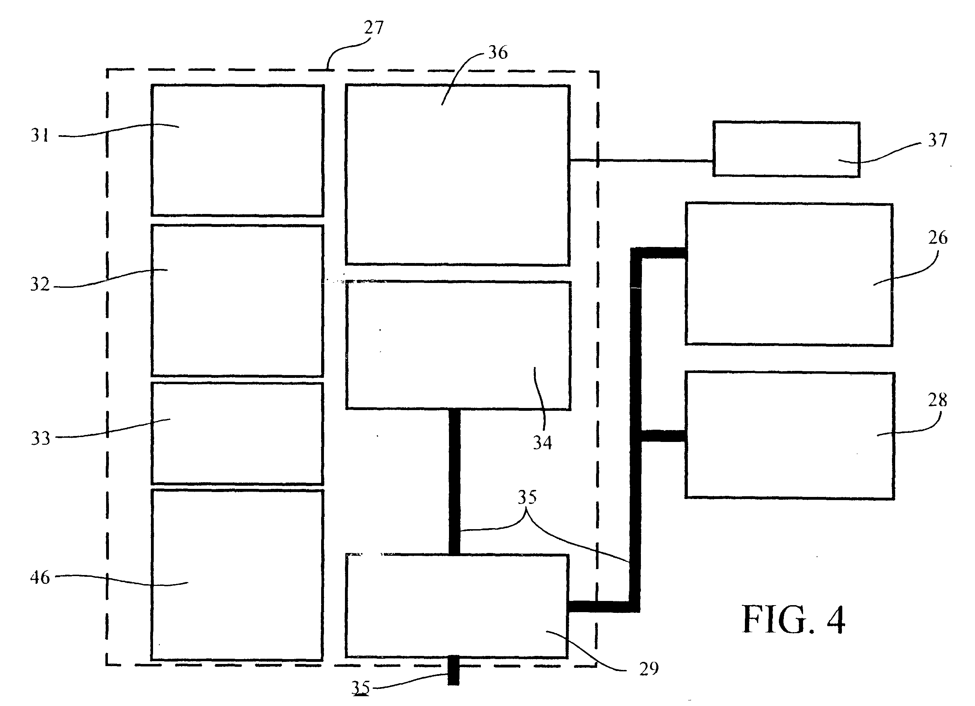

L'autre version de la réalisation électronique de l'enregistreur, représentée par la figure 4, présente la même fonctionnalité que celle de la réalisation décrite en référence à la figure 3. Dans cette variante, les éléments 29, 31, 32, 33, 34 et 36 sont réalisés sous une forme intégrée et regroupés dans un circuit intégré. En outre, un deuxième capteur de température 46 a été ajouté pour des questions de redondance et d'auto-test du système. Dans cette réalisation, le nombre de composants est ramené de vingt-deux à sept à cause de la présence du circuit intégré spécifique (ASIC). Les avantages du système par rapport au précédent sont dus à la diminution de l'encombrement, des coûts de production et à l'augmentation des performances par l'adjonction d'une fonction supplémentaire d'auto-test.

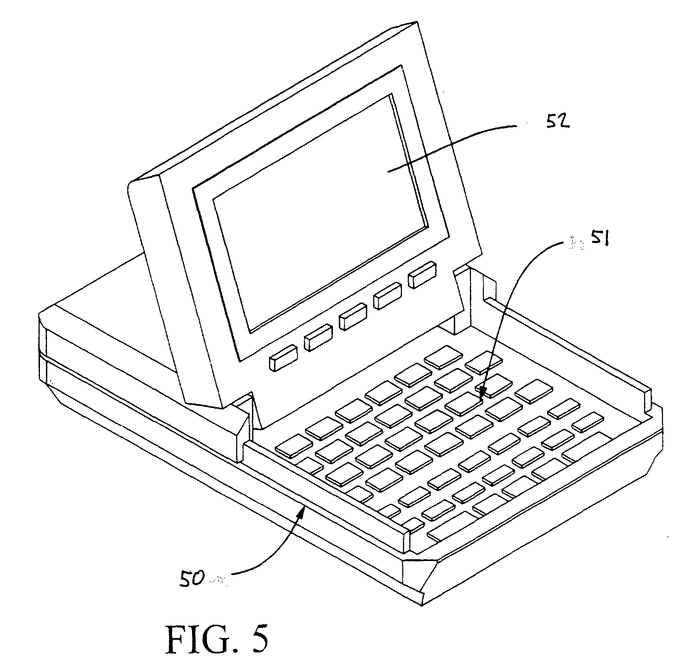

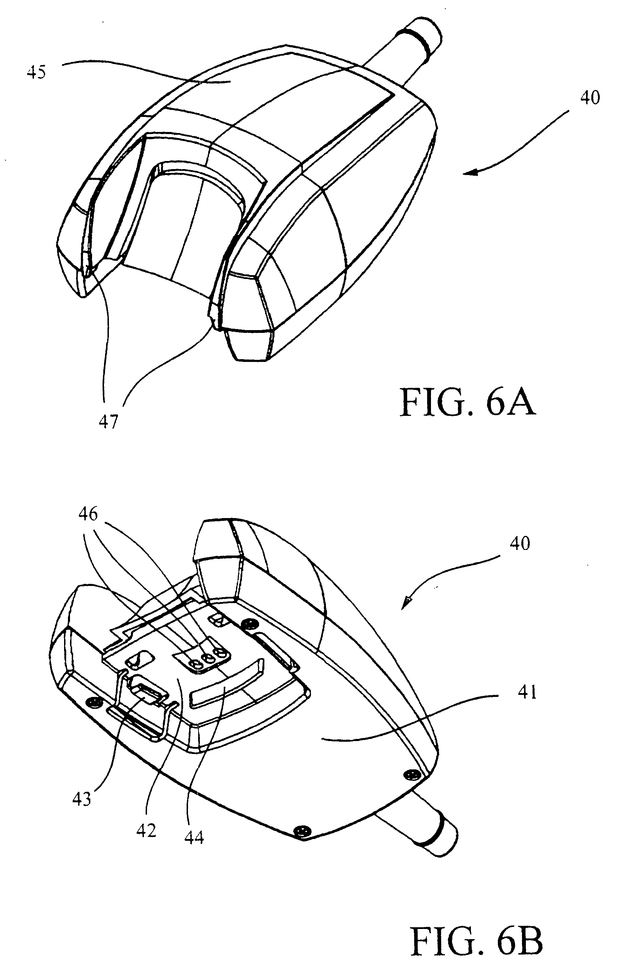

Les figures 5 et 6A, 6B représentent une vue en perspective des moyens de transfert et de lecture des valeurs mesurées par l'enregistreur 10. Ces moyens se composent de la tête de lecture 40, reliée par un câble de type connu au lecteur 50 qui est un appareil portable comportant un instrument électronique qui permet la visualisation des informations variables et constantes mémorisées par l'enregistreur 10.

Le lecteur 50 illustré par la figure 5 a l'aspect d'un ordinateur portable et est pourvu d'un clavier 51 du type alphanumérique et d'un écran 52, par exemple du type à cristaux liquides.

La tête de lecture 40 illustrée vue de dessus et de dessous respectivement par les figures 6A et 6B a une forme et des dimensions semblables à celles d'une souris d'ordinateur. Elle permet de venir à tout moment prélever et lire les valeurs mesurées par l'enregistreur 10. Comme celui-ci ne peut pas être retiré du produit sur lequel il est collé, cette tête est agencée pour venir s'appliquer sur l'enregistreur. A cet effet la face inférieure 41 de la tête 40 est pourvue d'un logement 42 de forme et de dimensions appropriées pour recevoir l'enregistreur 10. Chaque paroi latérale de ce logement est pourvue d'une languette horizontale 43 agencée pour venir coulisser dans la rainure 18 de l'enregistreur 10. Une butée transversale 44, dont la forme correspond à celle de la face arrière de l'enregistreur 10, définit le positionnement de l'enregistreur. La surface supérieure de la tête 40 est par ailleurs pourvue d'un bouton 45 permettant de mettre en contact sous l'action d'un ressort les contacts métalliques 14 de l'enregistreur 10 avec trois éléments métalliques 46 rétractables et solidaires dudit bouton, et de bloquer l'enregistreur dans la tête par l'emboîtement de deux ergots 47, solidaire de ce bouton, dans les décrochements 19 des faces latérales de l'enregistreur 10. L'établissement du contact entre les éléments métalliques 14 et 46 permet le transfert des informations de l'enregistreur dans la tête de lecture.

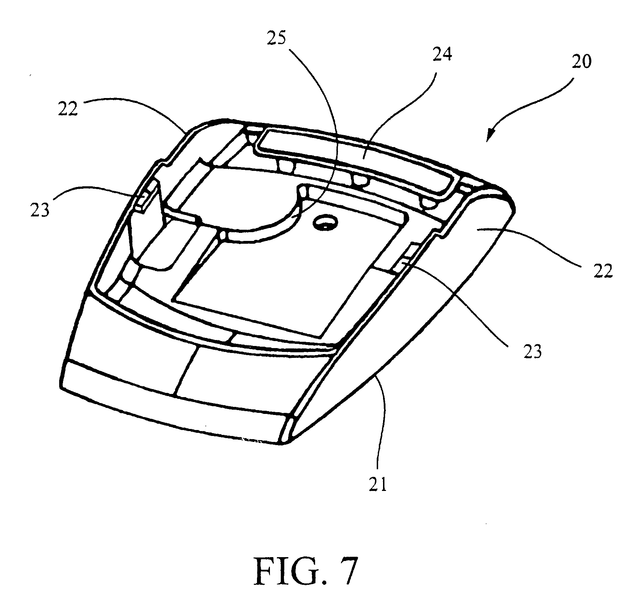

L'enregistreur 10 peut également être fixé sur le produit par l'intermédiaire d'un support 20 tel que représenté par la figure 7. Ce support 20 se présente sous la forme d'un boîtier ouvert de forme sensiblement parallélépipédique comportant un fond plan 21 agencé pour être pourvu de moyens de positionnement sur le produit à surveiller. Ces moyens de positionnement peuvent se présenter sous la forme d'un revêtement autocollant permettant la fixation du support 20 sur le produit par collage. Les parois longitudinales opposées 22 de ce support sont pourvues sur leur face intérieure de moyens de positionnement de l'enregistreur 10 se présentant sous la forme d'ergots 23 positionnés de façon telle qu'ils viennent se loger dans le fond des rainures 18 de l'enregistreur 10. Une languette transversale de clipsage 24 assure le maintien en position de l'enregistreur sur le support. Ce support renferme par ailleurs un aimant 25 dont le rôle sera défini par la suite.

Le dispositif tel que décrit a deux fonctions principales qui consistent d'une part à permettre à tout moment un contrôle ponctuel des critères d'acceptation du produit lié à un paramètre physique déterminé et d'autre part à pouvoir obtenir un historique complet des étapes de surveillance de ce produit.

Lorsque l'enregistreur 10 a été collé sur le produit à surveiller, il est prêt à mesurer, à enregistrer et à permettre la visualisation de la variation du paramètre physique, par exemple la température, avec le temps par rapport à des valeurs prédéterminées en fonction du produit. Cette visualisation se fait au moyen des trois indicateurs 15.

Pour effectuer un contrôle ponctuel de l'état du produit, on positionne pendant quelques secondes un aimant au-dessus de l'enregistreur 10. Cet aimant permet l'activation du relais à lame 37 de l'enregistreur et l'enclenchement momentané d'un des indicateurs 15.

Si le paramètre physique, par exemple la température du produit, reste dans une zone non critique pour le produit, définie par une des valeurs limites dudit paramètre pour le produit concerné, l'indicateur vert s'allume.

Si la température a évolué pendant un certain temps dans une zone dans laquelle le produit est considéré comme avarié, ladite zone étant définie par une valeur limite de la température ou une limite obtenue par la combinaison d'une valeur dudit paramètre et d'une durée prédéterminée, par exemple le dépassement d'une température limite haute ou basse ou le dépassement d'un temps limite pendant lequel la valeur limite de la température a été dépassée pendant un temps déterminé, l'indicateur rouge s'allume.

Si la température a évolué dans une zone intermédiaire qui est critique pour le produit, ce qui veut dire qu'il est en train de se détériorer, ladite zone étant située entre la zone non critique et la zone où le produit est considéré comme avarié, l'indicateur jaune s'allume. Cette variation de comportement est définie à partir de la variation de la combinaison de la température avec le temps par rapport à un seuil prédéterminé et peut par exemple être un dépassement d'un temps limite d'avertissement pendant lequel la température a dépassé une limite de température ou le dépassement d'une température limite haute ou basse d'avertissement.

Cet indicateur de zone critique, s'il est lumineux, peut présenter une intensité lumineuse variable selon que l'on se rapproche de la zone où le produit devient avarié.

Lorsque l'on veut obtenir la restitution de toutes les informations enregistrées dans l'enregistreur 10 avec ou sans support 20, on positionne la tête de lecture 40 sur l'enregistreur. Les informations mémorisées peuvent alors être lues sur le lecteur 50 et restituent l'évolution de la vie du produit.

En outre, il est important de savoir si l'enregistreur a été désolidarisé du produit ou du support et que le produit est resté sans surveillance pendant un certain temps. Lorsque l'enregistreur est directement collé sur le produit par un revêtement autocollant, l'arrachage est visible. Lorsque l'enregistreur est solidaire d'un support 20, ce contrôle est possible avec l'ensemble de protection magnétique inclus dans le dispositif et formé par l'aimant 25 du support qui coopère avec le relais électromagnétique 37 de l'enregistreur 10. Si l'on retire l'enregistreur du support cette liaison magnétique est rompue et la désolidarisation est enregistrée dans la mémoire morte de l'enregistreur avec l'instant à laquelle elle s'est produite. La visualisation immédiate de cette rupture peut être obtenue par le clignotement d'un ou de tous les indicateurs 15.

Le lecteur 50 est par ailleurs agencé pour programmer individuellement chaque enregistreur et en particulier pour lui attribuer un code d'accès pour préserver la sécurité du dispositif.

Selon une variante de réalisation, le transfert de données de la tête de lecture vers le lecteur peut également se faire par une liaison sans fils, à distance. Les données peuvent être transmises directement du lecteur vers une imprimante, sans passer par un ordinateur ou similaire.

Le lecteur peut être relié à un ordinateur pour des questions d'archivage ou pour améliorer le confort d'utilisation. A cet effet un programme d'utilisation peut être développé en fonction de la demande de l'utilisateur. Cet utilisateur peut alors intégrer les données de l'enregistreur dans son propre système de gestion. A titre d'exemple, il devient possible d'utiliser un tableur pour faire des graphiques illustrant l'évolution du ou des paramètres physiques en fonction du temps et de les imprimer.

Le dispositif décrit ci-dessus est avantageux par sa faible taille, son coût de fabrication réduit et sa faible consommation et le fait qu'il permet de contrôler un produit, notamment une poche de sang en respectant les normes en vigueur, sans jamais rompre la liaison produit-dispositif de surveillance et sans le manipuler. Etant donné les faibles dimensions du dispositif et le fait qu'il est étanche, il peut également être inséré dans le ventre d'un poisson tel qu'un saumon pour suivre la température à laquelle il est maintenu entre le moment où il a été péché et celui où il se retrouve sur l'étalage du poissonnier. La précision des mesures de température effectuées est de l'ordre de 0,5°C. Cette précision est suffisante pour le contrôle d'une chaîne de froid et la précision de 1/100°C des dispositifs actuellement utilisés, qui sont des dispositifs de laboratoire, n'est pas nécessaire.

Le dispositif peut par ailleurs être entièrement programmé en usine ou individuellement par l'utilisateur au moyen du lecteur. D'autres développements peuvent être envisagés, par exemple l'utilisation sans témoins lumineux apparents remplacés par un code de lecture secret ou par des indicateurs sonores. Les capteurs peuvent être intégrés dans les circuits de l'enregistreur ou montés à l'extérieur. Dans une variante de réalisation on peut aussi prévoir que le support soit également actif. Il contient alors une électronique supplémentaire ayant des fonctions complémentaires à celles de l'enregistreur. A titre d'exemple, cette électronique supplémentaire peut prendre en charge les alarmes ou gérer la communication des données de l'enregistreur vers une centrale qui pourrait être située à distance, notamment sur le tableau de bord d'un camion frigorifique.

## Revendications

1. Dispositif de surveillance de l'évolution dans le temps d'au moins un paramètre physique pour prévenir la contamination ou la dégradation d'un produit périssable, comportant des moyens pour mesurer à intervalles réguliers ledit paramètre physique et enregistrer les valeurs mesurées de ce paramètre en fonction du temps, des moyens pour comparer l'évolution des valeurs du paramètre dans le temps à un critère d'acceptation correspondant à des limites de valeurs du paramètre où le produit est en dessous d'un risque de contamination ou de dégradation, des moyens de transfert et de lecture des valeurs mesurées et des moyens pour générer un signal au cas où ce critère d'acceptation est dépassé, lesdits moyens pour générer un signal comportant un premier indicateur (15) agencé pour signaler que ledit paramètre physique a évolué dans une zone qui est non critique pour le produit, un deuxième indicateur (15) agencé pour signaler que ledit paramètre physique a évolué dans une zone dans laquelle le produit est considéré comme avarié, et au moins un troisième indicateur (15) agencé pour signaler la variation du comportement du produit dans une zone intermédiaire qui est critique pour ce produit, lesdites zones étant définies par une combinaison de valeurs dudit paramètre physique et du temps passé par le produit périssable dans des conditions définies par ce paramètre, **caractérisé en ce qu'**il comporte des moyens de contrôle ponctuel comportant un aimant coopérant avec au moins l'un desdits indicateurs (15).

2. Dispositif selon la revendication 1, **caractérisé en ce qu'**il comporte en outre des moyens pour définir une valeur limite dudit paramètre physique, ces moyens étant couplés audit deuxième indicateur et agencés pour enclencher cet indicateur lorsque le produit périssable se trouve dans des conditions situées hors de cette valeur limite.

3. Dispositif selon la revendication 1, **caractérisé en ce qu'**il comporte en outre des moyens pour définir deux valeurs limites délimitant une plage de valeurs acceptables dudit paramètre physique, ces moyens étant couplés auxdits premier, deuxième et troisième indicateurs et agencés pour enclencher le deuxième indicateur lorsque le produit périssable a séjourné dans des conditions situées hors desdites valeurs limites, et pour enclencher ledit premier ou ledit troisième indicateur lorsque le produit a séjourné dans des conditions correspondant à la plage des valeurs acceptables dudit paramètre physique, l'enclenchement dudit premier ou dudit troisième indicateur dépendant de la combinaison de valeurs du paramètre physique et du temps.

4. Dispositif selon l'une quelconque des revendications précédentes, **caractérisé en ce que** les moyens pour mesurer le paramètre physique et enregistrer les valeurs mesurées en fonction du temps comportent un enregistreur (10) en contact avec le produit à surveiller.

5. Dispositif selon l'une quelconque des revendications 1 à 3, **caractérisé en ce que** les moyens pour mesurer le paramètre physique et enregistrer les valeurs mesurées en fonction du temps comportent un enregistreur (10) pourvu desdits indicateurs (15), ledit enregistreur étant solidaire d'un support (20) en contact avec le produit à surveiller.

6. Dispositif selon les revendications 4 et 5, **caractérisé en ce que** l'enregistreur (10) comporte au moins une base de temps (21) une mémoire ROM (22) pour stocker les données constantes, une mémoire RAM (23) pour stocker les données variables, une unité (27) de contrôle de l'enregistrement, un dispositif intermédiaire (24), un élément électromagnétique (37) et au moins un premier capteur (26).

7. Dispositif selon les revendications 1 et 6, **caractérisé en ce que** l'élément électromagnétique (37) est agencé pour coopérer avec ledit aimant en vue d'enclencher les indicateurs (15), ledit aimant étant extérieur audit enregistreur (10).

8. Dispositif selon les revendications 4 et 5, **caractérisé en ce qu'**il comporte des moyens agencés pour détecter le retrait de l'enregistreur (10) du produit qu'il doit surveiller ou de son support (20).

9. Dispositif selon les revendications 4 et 5, **caractérisé en ce que** l'enregistreur (10) comprend un boîtier (11) comportant un fond plat (12), et **en ce que** ledit fond est pourvu de moyens de fixation dudit enregistreur sur le produit.

10. Dispositif selon les revendications 8 et 9, **caractérisé en ce que** les moyens de fixation de l'enregistreur (10) sur le produit comportent un revêtement autocollant dont le décollement est détectable lors d'un retrait dudit enregistreur.

11. Dispositif selon la revendication 5, **caractérisé en ce que** ledit support (20) comporte des moyens de fixation sur le produit à surveiller et des moyens de positionnement (23, 24) agencés pour coopérer avec des moyens correspondants (18) de l'enregistreur (10).

12. Dispositif selon la revendication 8, **caractérisé en ce que** les moyens pour détecter le retrait de l'enregistreur (10) comportent un aimant (25) logé dans ledit support (20), ledit aimant coopérant avec l'élément électromagnétique (37) intégré dans ledit enregistreur.

13. Dispositif selon les revendications 1 à 3, **caractérisé en ce que** ledit troisième indicateur de variation de comportement du produit est un indicateur lumineux dont l'intensité lumineuse varie en fonction de ladite variation de comportement.

14. Dispositif selon la revendication 1, **caractérisé en ce que** les moyens de transfert et de lecture des valeurs mesurées comportent une tête de lecture (40) solidaire d'un lecteur (50).

15. Dispositif selon les revendications 4 et 14, **caractérisé en ce que** la tête de lecture (40) est agencée pour coopérer avec l'enregistreur (10) et est pourvue d'éléments de contact métalliques (46) agencés pour correspondre avec des éléments de contact métalliques (14) de l'enregistreur (10) en vue de la transmission des données mémorisées dans ledit enregistreur, et de moyens de positionnement (43, 44) sur cet enregistreur.

16. Dispositif selon les revendications 9 et 15, **caractérisé en ce que** le boîtier (11) de l'enregistreur (10) comporte des moyens de positionnement (18, 19) de la tête de lecture (40) sur ledit enregistreur (10).

17. Dispositif selon la revendication 6, **caractérisé en ce que** l'enregistreur (10) comporte un deuxième capteur (46) similaire au premier capteur (26) en vue de réaliser des tests automatiques.

18. Dispositif selon la revendication 14, **caractérisé en ce que** le lecteur (50) comporte un clavier (51) et un écran (52) et des moyens de liaison avec l'enregistreur (10).

19. Dispositif selon les revendications 1 à 3, **caractérisé en ce que** ledit paramètre physique est la température.

## Patentansprüche

1. Vorrichtung zur Überwachung der Entwicklung mindestens eines physikalischen Parameters innerhalb eines Zeitraums, zur Vermeidung der Kontamination oder der Zersetzung eines leicht verderblichen Produktes, die Mittel zum Messen des physikalischen Parameters in regelmäßigen Abständen und zum Aufzeichnen der Meßwerte dieses Parameters in Abhängigkeit von der Zeit umfaßt, Mittel zum Vergleichen der Entwicklung der Parameterwerte im Verlauf eines Zeitraums im Vergleich zu einem Annahmekriterium, das Grenzwerten des Parameters entspricht, bei denen das Produkt einem Risiko der Kontamination oder der Zersetzung ausgesetzt ist, Mittel zum Übertragen und zum Lesen der Meßwerte und Mittel zum Erzeugen eines Signals bei Überschreitung dieses Annahmekriteriums, wobei die Mittel zum Erzeugen eines Signals eine erste Anzeigevorrichtung (15) umfassen, die so ausgebildet ist, daß sie anzeigt, daß sich der physikalische Parameter in eine für das Produkt nicht kritische Zone entwickelt hat, eine zweite Anzeigevorrichtung (15), die so ausgebildet ist, daß sie anzeigt, daß sich der physikalische Parameter in eine Zone entwickelt hat, in der das Produkt als verdorben angesehen wird, und mindestens eine dritte Anzeigevorrichtung (15), die so ausgebildet ist, daß sie die Veränderung des Produktverhaltens in einer für dieses Produkt kritischen Zwischenzone anzeigt, wobei die Zonen durch eine Kombination von Werten des physikalischen Parameters und der von dem leicht verderblichen Produkt unter den durch diesen Parameter definierten Bedingungen durchlaufenen Zeit definiert werden,
**dadurch gekennzeichnet, daß**
sie Mittel zur Ad-hoc-Prüfung mit einem Magneten umfaßt, der mit mindestens einer der Anzeigevorrichtungen (15) zusammenwirkt.

2. Vorrichtung nach Anspruch 1,
**dadurch gekennzeichnet, daß**
sie außerdem Mittel zur Definition eines Grenzwertes des physikalischen Parameters umfaßt, wobei diese Mittel mit der zweiten Anzeigevorrichtung verbunden und so ausgebildet sind, daß sie diese Anzeigevorrichtung aktivieren, wenn sich das leicht verderbliche Produkt in einem außerhalb dieses Grenzwertes liegenden Zustand befindet.

3. Vorrichtung nach Anspruch 1,
**dadurch gekennzeichnet, daß**
sie außerdem Mittel zur Definition von zwei Grenzwerten umfaßt, die eine Bandbreite an annehmbaren Werten des physikalischen Parameters begrenzen, wobei diese Mittel mit der ersten, zweiten und dritten Anzeigevorrichtung verbunden und so ausgebildet sind, daß sie die zweite Anzeigevorrichtung aktivieren, wenn sich das leicht verderbliche Produkt in einem außerhalb der Grenzwerte liegenden Zustand befand, und die zweite oder die dritte Anzeigevorrichtung aktivieren, wenn sich das leicht verderbliche Produkt in einem innerhalb der Bandbreite der annehmbaren Werte des physikalischen Parameters liegenden Zustand befand, wobei die Aktivierung der ersten oder der dritten Anzeigevorrichtung von der Kombination von Werten des physikalischen Parameters und der Zeit abhängig ist.

4. Vorrichtung nach einem beliebigen der vorangegangenen Ansprüche,
**dadurch gekennzeichnet, daß**
die Mittel zum Messen des physikalischen Parameters und zum Aufzeichnen der Meßwerte in Abhängigkeit von der Zeit eine mit dem zu überwachenden Produkt in Kontakt befindliche Aufzeichnungsvorrichtung (10) umfassen.

5. Vorrichtung nach einem beliebigen der Ansprüche 1 bis 3,
**dadurch gekennzeichnet, daß**
die Mittel zum Messen des physikalischen Parameters und zum Aufzeichnen der Meßwerte in Abhängigkeit von der Zeit eine mit den Anzeigevorrichtungen (15) versehene Aufzeichnungsvorrichtung (10) umfassen, wobei die Aufzeichnungsvorrichtung mit einem mit dem zu überwachenden Produkt in Kontakt befindlichen Träger (20) fest verbunden ist.

6. Vorrichtung nach den Ansprüchen 4 und 5,
**dadurch gekennzeichnet, daß**
die Aufzeichnungsvorrichtung (10) mindestens eine Zeitbasis (21), einen ROM-Speicher (22) zum Speichern der konstanten Daten, einen RAM-Speicher (23) zum Speichern der veränderbaren Daten, eine Einheit (27) zur Aufzeichnungskontrolle, eine Zwischenvorrichtung (24), ein elektromagnetisches Element (37) und mindestens einen ersten Sensor (26) umfaßt.

7. Vorrichtung nach den Ansprüchen 1 und 6,
**dadurch gekennzeichnet, daß**
das elektromagnetische Element (37) so ausgebildet ist, daß es mit dem Magneten zusammenwirkt, um die Anzeigevorrichtungen (15) zu aktivieren, wobei sich der Magnet außerhalb der Aufzeichnungsvorrichtung (10) befindet.

8. Vorrichtung nach den Ansprüchen 4 und 5,
**dadurch gekennzeichnet, daß**
sie Mittel umfaßt, die so ausgebildet sind, daß sie das Abnehmen der Aufzeichnungsvorrichtung (10) von dem Produkt, das sie überwachen soll, oder von ihrem Träger (20) erkennen.

9. Vorrichtung nach den Ansprüchen 4 und 5,
**dadurch gekennzeichnet, daß**
die Aufzeichnungsvorrichtung (10) ein Gehäuse (11) mit einem flachen Boden (12) umfaßt, wobei der Boden mit Mitteln zum Befestigen der Aufzeichnungsvorrichtung auf dem Produkt versehen ist.

10. Vorrichtung nach den Ansprüchen 8 und 9,
**dadurch gekennzeichnet, daß**
die Mittel zum Befestigen der Aufzeichnungsvorrichtung (10) auf dem Produkt einen selbstklebenden Überzug umfassen, dessen Abziehen bei einem Abnehmen des Aufzeichnungsgerätes erkennbar ist.

11. Vorrichtung nach Anspruch 5,
**dadurch gekennzeichnet, daß**
der Träger (20) Mittel zum Befestigen auf dem zu überwachenden Produkt und Positionierungsmittel (23,24) umfaßt, die so ausgebildet sind, daß sie mit entsprechenden Mitteln (18) des Aufzeichnungsgerätes zusammenwirken.

12. Vorrichtung nach Anspruch 8,
**dadurch gekennzeichnet, daß**
die Mittel zum Erkennen des Abnehmens der Aufzeichnungsvorrichtung (10) einen in dem Träger (20) untergebrachten Magneten (25) umfassen, wobei der Magnet mit dem in dem Aufzeichnungsgerät integrierten elektromagnetischen Element (37) zusammenwirkt.

13. Vorrichtung nach den Ansprüchen 1 bis 3,
**dadurch gekennzeichnet, daß**
die dritte Anzeigevorrichtung für die Verhaltensveränderung des Produktes eine Anzeigelampe ist, deren Lichtintensität sich in Abhängigkeit von der Verhaltensveränderung verändert.

14. Vorrichtung nach Anspruch 1,
**dadurch gekennzeichnet, daß**
die Mittel zum Übertragen und zum Lesen der Meßwerte einen fest mit einer Lesevorrichtung (50) verbundenen Lesekopf (40) umfassen.

15. Vorrichtung nach den Ansprüchen 4 und 14,
**dadurch gekennzeichnet, daß**
der Lesekopf (40) so angeordnet ist, daß er mit der Aufzeichnungsvorrichtung (10) zusammenwirkt und mit Metallkontaktelementen (46) versehen ist, die so ausgebildet sind, daß sie den Metallkontaktelementen (14) der Aufzeichnungsvorrichtung (10) zum Übertragen gespeicherter Daten in die Aufzeichnungsvorrichtung entsprechen, und mit Mitteln (43,44) zur Positionierung auf dieser Aufzeichnungsvorrichtung versehen ist.

16. Vorrichtung nach den Ansprüchen 9 und 15,
**dadurch gekennzeichnet, daß**
das Gehäuse (11) der Aufzeichnungsvorrichtung (10) Mittel (18,19) zur Positionierung des Lesekopfes (40) auf der Aufzeichnungsvorrichtung (10) umfaßt.

17. Vorrichtung nach Anspruch 6,
**dadurch gekennzeichnet, daß**
die Aufzeichnungsvorrichtung (10) einen zweiten Sensor (46) umfaßt, der dem ersten Sensor (26) im Hinblick auf die Ausführung der automatischen Tests ähnlich ist.

18. Vorrichtung nach Anspruch 14,
**dadurch gekennzeichnet, daß**
die Lesevorrichtung (50) eine Tastatur (52) und einen Bildschirm (52) und Mittel zur Verbindung mit der Aufzeichnungsvorrichtung (10) umfaßt.

19. Vorrichtung nach den Ansprüchen 1 bis 3,
**dadurch gekennzeichnet, daß**
der physikalische Parameter die Temperatur ist.

## Claims

1. A device for monitoring the evolution of at least one physical parameter over time to prevent contamination or spoilage of a perishable product, comprising means for measuring said physical parameter at regular intervals and recording the measured values of this parameter as a function of time, means for comparing valuation of the parameter over time to an acceptance criterion corresponding to the parameter limits below which the product is at risk of contamination or spoilage, means for transferring and reading the measured values and means for generating a signal if this acceptance criterion is exceeded, said signal generating means comprising a first indicator (15) designed to indicate that said physical parameter has evolved into a zone which is not critical for the product, a second indicator (15) designed to indicate that said physical parameter has evolved into a zone in which the product is considered as spoiled, and at least one third indicator (15) designed to indicate the change of the behaviour of the product in an intermediate zone which is critical for this product, said zones being defined by a combination of the values of said physical parameter and time spent by the perishable product in conditions defined by said parameter, **characterized in that** the device comprises selective control means comprising a magnet co-operating with at least one of said indicators (15).

2. A device according to claim 1 **characterized in that** it further comprises a means for defining a value limit for said physical parameter, said means being associated with said second indicator and designed to trigger this indicator when the perishable product is subjected to conditions which exceed this value limit.

3. A device according to claim 1 **characterized in that** it further comprises a means for defining two value limits delimiting a range of acceptable values for said physical parameter, this means being associated with said first, second and third indicators and designed to trigger the second indicator when the perishable product has remained subjected to conditions that exceed said value limits, and to trigger said first or said third indicator when the product has remained subjected to conditions corresponding to the range of acceptable values for said physical parameter, the triggering of said first or said third indicator depending upon the combination of physical parameter values and time parameter values.

4. A device according to any one of the preceding claims, **characterized in that** the means for measuring the physical parameter and recording the values measured as a function of time comprises a recorder (10) in contact with the product being monitored.

5. A device according to any one of claims 1 to 3 **characterized in that** the means for measuring the physical parameter and recording the values measured as a function of time comprises a recorder (10) provided with said indicators (15), said recorder being integral with a support (20) in contact with the product to be monitored.

6. A device according to claims 4 and 5 **characterized in that** the recorder (10) comprises at least one time base (21), a ROM (22) for storing data constants, a RAM (23) for storing data variables, a memory control unit (27), an intermediate device (24), an electromagnetic element (37), and at least a first sensor (26).

7. A device according to claims 1 and 6 **characterized in that** the electromagnetic element (37) is designed to co-operate with said magnet in order to trigger the indicators (15), said magnet being external to the said recorder (10).

8. A device according to claims 4 and 5 **characterized in that** it comprises a means for detecting detachment of the recorder (10) from the product it is monitoring or from its support (20).

9. A device according to claims 4 and 5 **characterized in that** the recorder (10) comprises a housing (11) with a flat base (12), and **in that** said base is equipped with fixing means of said recorder to the product.

10. A device according to claims 8 and 9 **characterized in that** the fixing means of the recorder (10) to the product comprises a self-sticking coating whose detachment can be detected at the time of said recorder is removed.

11. A device according to claim 5 **characterized in that** said support (20) comprises a means for fixing it to the product to be monitored and a positioning means (23, 24) designed to co-operates with a corresponding means (18) on the recorder (10).

12. A device according to claim 8 **characterized in that** the means for detecting separation of the recorder (10) consists of a magnet (25) housed within said support (20), said magnet co-operating with the electromagnetic device (37) integrated within said recorder.

13. A device according to claims 1 to 3 **characterized in that** said third indicator of change of product behaviour is an indicator light which varies in brightness as a function of said change in behaviour.

14. A device according to claim 1 **characterized in that** the means for transferring and reading the measured values consists of a reading head (40) integral with a reader (50).

15. A device according to claims 4 and 14 **characterized in that** the reading head (40) is designed to co-operate with the recorder (10) and is equipped with metal contact elements (46) designed to correspond with metal contact elements (14) on the recorder (10) for transmitting data stored in said recorder, and a means (43, 44) for positioning it on this recorder.

16. A device according to claims 9 and 15 **characterized in that** the housing (11) for the recorder (10) comprises a means (18,19) for positioning the reading head (40) onto said recorder (10).

17. A device according to claim 6 **characterized in that** the recorder (10) comprises a second sensor (46) similar to the first sensor (26) in order to perform automatic tests.

18. A device according to claim 14 **characterized in that** the reader (50) consists of a keyboard (51) and a display screen (52) and a means for connecting it to the recorder (10).

19. A device according to claims 1 to 3 **characterized in that** said physical parameter is temperature.
